# EUROPEAN PATENT APPLICATION

(11) **EP 2 250 877 A1**
(43) Date of publication of application: **17.11.2010**
(21) Application number: 10162089.6
(22) Date of filing: 06.05.2010
(51) Int. Cl.: A01G 13/02

(54) **Apparatus by which a protective sleeve is applied on a seedling**

(30) Priority: 12.05.2009 SE 0950328
(71) Applicant: ProForestry Sweden AB, 193 34 Sigtuna (SE)
(72) Inventor: ERIKSSON, Sören, 754 35, UPPSALA (SE)
(74) Representative: Holmberg, Nils Anders Patrik

(57) **Abstract**

An apparatus is disclosed and configured for applying a tube-shaped sleeve onto a seedling standing in a cultivation cell formed in a cultivation cassette comprising at least one row of cultivation cells, the apparatus comprising positioning means for positioning of the cultivation cassette relative to a holder (6) for sleeves, the sleeve holder (6) arranged movable and driven for reciprocating motion in the length direction of a seedling to effect insertion of the seedling into a sleeve such that the sleeve extends about the seedling in at least a portion of the length of the seedling. A seedling aligner (4) incorporated in the apparatus comprises a set of rulers (9) which extend side by side in pairs and which are associated with drive means (13) by which each ruler (9) is pivotable about a pivot axis located near to one longitudinal edge of each ruler respectively, to assume a horizontal orientation wherein the rulers between themselves support the seedling in the path of movement of the sleeve holder (6), from which position the rulers (9) are pivotable into a vertical orientation wherein the rulers extend outside and on opposite sides of the sleeve holder's (6) path of movement.

## Description

### TECHNICAL FIELD OF THE INVENTION

The present invention refers to an apparatus that is arranged for applying a sleeve onto a seedling such that the sleeve is extended about the seedling along at least a portion of the length of the seedling, and preferably from the region of the seedling's root end towards its top end.

### BACKGROUND AND PRIOR ART

This invention originates from a mechanical protection of forest seedlings against the attack of pine weevil, described in WO 2007/ 133159. The invention will be explained as an embodiment suitable for applying the tube-shaped sleeves that are described in the named publication, however, it will be appreciated that the apparatus may as well be arranged and used for applying sleeves of other configuration and for other purpose.

The seedlings referred to are typically drawn up in boxes or cassettes comprising a matrix of cultivation cells arranged in rows and columns. A distance between cell canters can be in the order of 4-12 cm, and the number of cells in one cassette may vary up to a hundred cells or more. A singular seedling rises from each cultivation cell. In case of forest seedlings, the seedlings have reached a length typically in the order of 20-30 cm before plantation. Generally, the seedlings within a singular cassette exhibit varying growth and may differ with respect to their length, sturdiness and straightness.

The invention originates from a desire for an automated application of a mechanical protection in the form of a tube-shaped sleeve about the seedling before plantation. The subject sleeves may be produced from cellulose fibres, plastic or thin sheet metal, and will typically have a conical shape but may alternatively be cylindrical. The sleeves may comprise diametrically positioned folding lines in order to be stored in a flattened mode.

A problem to be solved in the development of an apparatus adapted for the purpose is to ensure correct positioning and centring of the seedling and simultaneously to permit insertion into the sleeve from the top end towards the root end of the seedling without interference from a positioning means.

### SUMMARY OF THE INVENTION

For the purpose of providing an automated application of sleeves, the above problem is solved through an apparatus incorporating the characterizing features of claim 1. Advantageous embodiments of the invention are further defined in the subordinated claims.

Briefly, an apparatus is provided and configured for applying a tube-shaped sleeve on a seedling that rises from a cultivation cell in a cassette having at least one row of cultivation cells. The apparatus comprises positioning means for positioning the cassette with respect to a holder for sleeves, the holder being arranged movable and driven in reciprocating motion in the length direction of the seedling to effect application of a sleeve onto the seedling such that the sleeve extends about at least a portion of the length of the seedling. A seedling aligning means in the apparatus has a set of rulers that extend side by side in pairs and which are associated with drive means by which the rulers are pivotable about a pivot axis running nearer to one longitudinal side of each ruler, respectively. The rulers can be pivoted from a horizontal orientation wherein the seedling is supported between the rulers and positioned in the path of movement of the sleeve holder, to a vertical orientation wherein the rulers are located outside the path of movement of the sleeve holder, one on each side thereof.

The solution permits the sleeve holder with the sleeve supported therein to be moved downwards over the seedling without interference from the rulers.

In an advantageous and preferred embodiment the rulers are configured to be moved passively by the descending sleeve holder and pivoted into their positions beside the sleeve holder's path of movement. This operation can be accomplished mechanically in a solution comprising a disengaging locking mechanism. This operation can alternatively be realized through a hydraulically or pneumatically driven pivoting means in which the working pressure is cut off to permit the rulers to be passively pivoted. In the illustrated and preferred embodiment, the rulers are pivoted into the horizontal and supporting mode by means of a pneumatic pivoting means and a gear transmission, wherein a valve is arranged for venting the air circuit in synchronization with the sleeve holder's movement towards the cassette.

It is favourable if at least two pairs of rulers are arranged in separate planes or at separate levels, and vertically oriented above each other. This way, support of the seedling is provided at two or more levels along the length of the seedling, such that the seedling is straightened and the insertion into the sleeve is facilitated while simultaneously reducing the risk of mechanically damaging the seedling. For this purpose, three pairs of rulers may be arranged at different levels as shown in the illustrated and preferred embodiment.

Each individual ruler is a flat and elongate element having longitudinal edges running in parallel, and at a length which is adapted to the subject cultivation cassette. A pivot extends from one end of the ruler, substantially as an extension of the ruler's longitudinal edge, the pivot forming an axis about which the ruler is pivotable between a substantially vertical rest position and a substantially horizontal working position. The opposite longitudinal edge is shaped with recesses forming receiving seats for each seedling in a row of seedlings. The recesses, which are evenly spaced in the length of the ruler, are preferably U-shaped or V-shaped having a mouth that widens towards the edge of the ruler, this way providing guidance of the seedling or its stem towards the bottom of the recess as the ruler is pivoted into its working position. Positioning of the seedling is this way accomplished in both directions of the cassette, i.e. in X-direction and in Y-direction as well.

In a preferred embodiment the rulers in each pair of rulers are arranged in separate and nearby planes and at mutually overlapping widths such that the oppositely located recesses of the two rulers together form a circumferentially defined opening for the seedling, as the rulers are pivoted into the horizontal working position.

It is further preferred that at least the uppermost pair of rulers is adjustable in the height direction, i.e. in the length direction of the seedling. The uppermost rulers can this way, based on a measurement of the seedling length by means of sensors, be adjusted towards a top region of the seedling to provide an accurate positioning of the top end in the path of movement for the sleeve holder, substantially in a central position with respect to a sleeve that is dischargeable from the sleeve holder.

However, all rulers may advantageously be arranged adjustable in the height direction in order this way to facilitate an optimized distribution of supporting contacts in the length of the seedling. In such embodiment, the rulers may be arranged controllable for straightening the seedling in its length by first turning the rulers into the working position in their lowermost position and then lifting the rulers to an elevated position which is determined on basis of a measurement of the seedling lengths.

The rulers are supported movable in their longitudinal direction through a guide which runs horizontally and which is supported in a frame which further comprises means for receiving and for holding the cultivation cassette. Through the use of a drive means, such as an air cylinder, the seedling aligning means with its rulers can be advanced horizontally in between the rows of seedlings, from a starting position above and at a side of the cassette.

An alternative embodiment foresees a seedling aligner that is stationary supported in the frame, and a movable holder with associated drive means for a cultivation cassette that is movably supported in the frame.

Each pair of rulers is further, by means of the pivots, pivotally journalled in a support unit which comprises a turning motor, such as a pneumatic motor, and a gear transmission by which the rulers are linked together for synchronous rotation in mutually opposite directions of rotation.

The ruler support units are further arranged movable, individually and/or together, in a vertically oriented guide, each of the units associated with a drive means such as an air cylinder or motor which is operable for simultaneous or individual setting of the height position of the ruler pairs. Said vertical guide is arranged on a standing post along which the sleeve holder is supported movable for setting its height position and for effecting reciprocating movement of the sleeve holder in the vertical direction by means of a drive means, such as an air cylinder, e.g. The sleeve holder is for this purpose supported on a support arm that runs vertically from the post above the set of rulers and in the length direction of the rulers, and more specifically in such way that a centre of the sleeve holder can be aligned with the openings for the seedlings which are formed between the rulers in their horizontal positions.

The assembly including the post, the sleeve holder with a sleeve holder head, the support arm and the seedling aligner with rulers and associated support units and drive means, are preferably together supported in the frame to be brought as a singular unit in position with respect to the cultivation cassette and with respect to the row of seedlings. The assembly and/or the cassette can be arranged to move stepwise or continuously relative to each other, and at lengths which correspond to the distance between the rows of seedlings in the cassette.

The sleeve holder is a tube-shaped structure that is configured for releasably holding a sleeve and for carrying the sleeve in the motion of the sleeve holder, until the seedling is inserted into the sleeve. The grip about the sleeve can result form a frictional engagement between the sleeve holder and the sleeve. A releasable grip may alternatively be provided through a locking means, such as a heel or a shoulder, which is arranged movable on the sleeve holder and engages the sleeve for bringing the sleeve in the movement of the sleeve holder, and which is then controlled to release the sleeve from the grip of the sleeve holder. A third alternative may comprise an opening formed in the wall of the sleeve holder to which a negative air pressure is supplied in order to hold the sleeve by means of vacuum as the sleeve is threaded over the seedling.

The sleeve holder forms part of a sleeve holder head to which sleeves are fed from a supply of sleeve to be individually loaded into the sleeve holder. The sleeve holder head with sleeve holder is supported on the arm that is arranged movable on the post, and is advanced through the movement of the arm for applying the sleeves on the seedlings, and is returned by the arm to the start position above the seedlings.

Fixation of a sleeve on a seedling can basically be accomplished through engagement with the green parts of the seedling, such as the branches and leaves or needles. If necessary, means for fixation of the sleeve on the seedling may be included in the sleeve holder head, such as means causing a constriction at the upper end of the sleeve. e.g. A constriction may be accomplished through a flattening of the sleeve, or through riveting, gluing, or stapling, etc. To this purpose, one embodiment of the invention foresees that the sleeve holder permits the upper end of the sleeve to extend above the sleeve holder. A stapler and associated anvil is arranged on the sleeve holder head at the region of the protruding end of the sleeve. The stapler and anvil are driven, via a linkage and an air cylinder, in mutually synchronized movements for application of a staple through the upper portion of the sleeve, this way producing a restriction that secures the sleeve onto the seedling. In another alternative embodiment, the sleeve holder head comprises means by which a restriction is formed through flattening of the upper end of the sleeve.

### SHORT DESCRIPTION OF THE DRAWINGS

The invention will be more closely explained below with reference made to the accompanying drawings, the drawings schematically illustrating an embodiment of the invention. In the drawings,
Fig. 1 is a perspective assembly view showing the apparatus;
Figs. 2a-2d are end views showing a set of rulers and a sleeve holder in the apparatus, at different positions during a working cycle;
Fig. 3 is a top view showing the rulers in the supporting position of fig. 2b, and

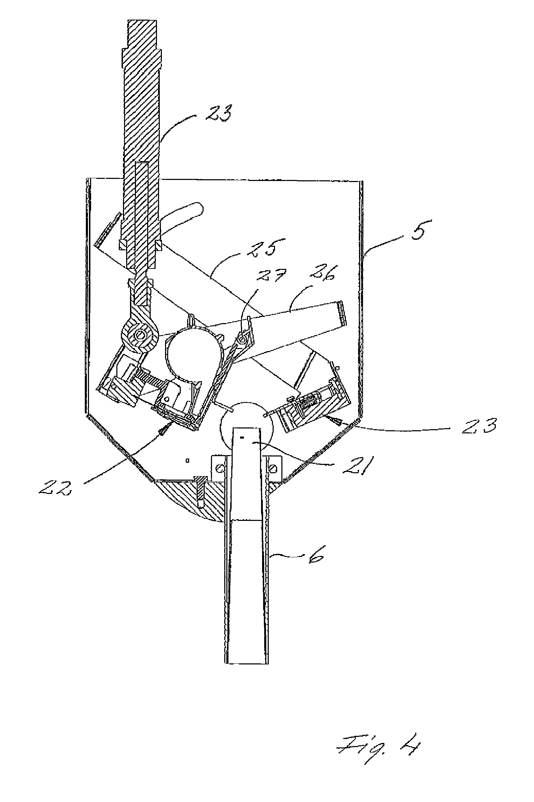

Fig. 4 is a partially sectioned view showing a sleeve holder head included in the apparatus.

### DETAILED DESCRIPTION OF EMBODIMENTS

It is initially pointed out that expressions used in the description such as horizontal and vertical are used merely to define the relative orientation of elements, planes and directions in the apparatus, and shall not be understood to define strictly the extension or orientation of these elements, planes or directions in the three dimensional space.

Also, for a detailed explanation of protective sleeves that are suitable for being applied onto a seedling with assistance from the apparatus of the present invention, reference is made to the aforementioned WO 2007/ 133159.

An apparatus according to the present invention comprises a frame 1 having a horizontally oriented receiving position 2 for a cultivation cassette (not shown), and an assembly 3 that is movably supported in the frame 1 and which is configured for applying tube-shaped sleeves over seedlings that rise from cultivation cells formed in the cassette. The assembly 3 basically comprises a seedling aligner 4 and a sleeve holder head 5 with a sleeve holder 6, all movably supported in the apparatus and arranged to be driven in synchronized movements for positioning and for alignment of seedlings and insertion of seedlings into the sleeves. In the illustrated embodiment, the assembly 3 is supported in a horizontal guide 7 and associated with a linear drive means 8 by which the assembly 3 can be moved inwards above the cassette from a starting position above and at one side of the cultivation cassette.

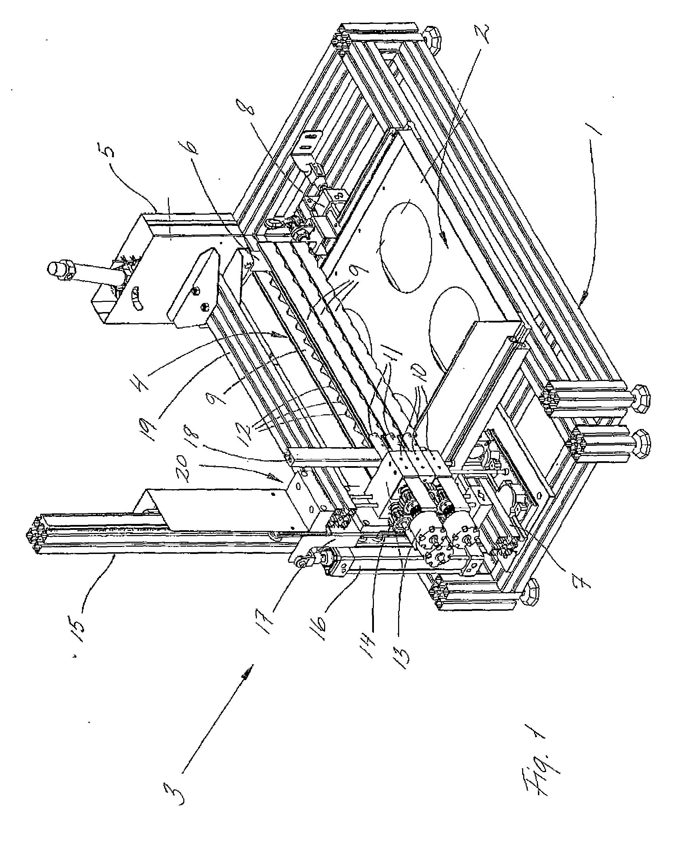

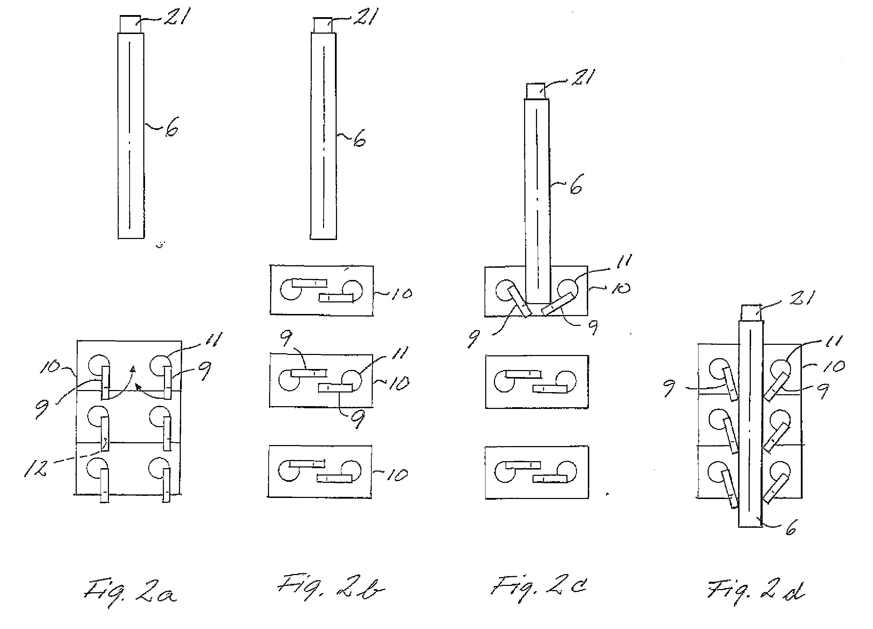

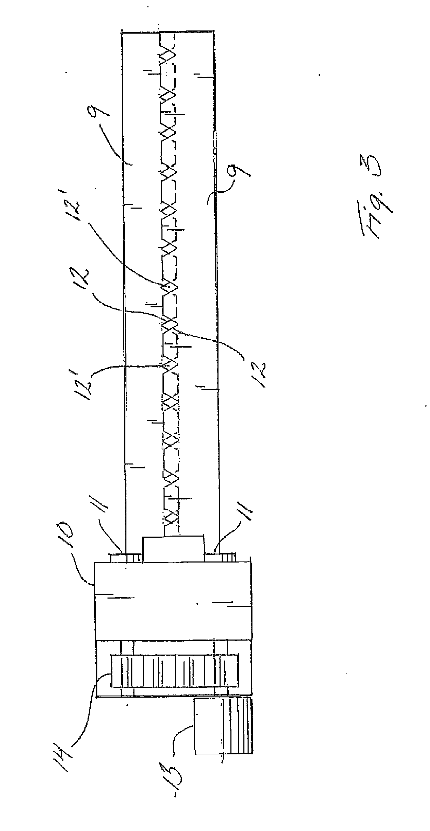

The seedling aligner 4 comprises one or more sets of elongate flat elements or rulers 9 that extend side by side in pairs and in parallel with each other, mutually spaced at a distance which is adapted to the distance between seedling rows in a cultivation cassette. The rulers 9 are pivotally supported in a support unit 10 by means of pivots 11 that extend in the longitudinal direction of each ruler in the region of one of its longitudinal edges, in fig. 1 the upper longitudinal edge of each respective ruler. The opposite longitudinal edge of the ruler comprises a number of evenly distributed and V-shaped recesses 12. A motor 13, driven by air, is arranged in the support unit 10 and via a gear transmission 14 operable for turning the rulers 9 in mutually opposite directions of rotation, from the vertical rest position shown in fig. 1 and fig. 2a to a horizontal position shown in fig. 2b wherein the recesses 12 meet to form a circumferentially defined opening 12' (see fig. 3), in which the seedling is captured and aligned with the sleeve holder 6. The illustrated seedling aligner 4 comprises three such sets of rulers which are movably supported on a post 15 and adjustable in the height direction, and associated with an air cylinder 16 and a linkage 17 by which the relative vertical distance between the sets of rulers can be adjusted synchronously with the elevation and lowering of the seedling aligner 4.

Adjustment of the height of the rulers above the cultivation cassette, as well as a choice of sleeve of suitable length, may advantageously be based on a measurement of the length of the seedlings by means of a number of optical sensors (not illustrated) which are arranged at different levels in a holder 18. As an example, measuring of the seedling length may be accomplished by means of two sensors, a first one of which is arranged to detect seedlings of lengths of up to 150 mm, whereas a second sensor is arranged to detect seedlings having lengths of above 200 mm.

On the post 15 there is further movably arranged a support arm 19 which can be elevated and lowered by means of a drive means, such as an air cylinder e.g., which is hidden in the drawing of fig. 1 but whose location in the apparatus is indicated through the arrow 20. The support arm 19 carries the sleeve holder head and sleeve holder 6 which are moved together with the support arm in its vertical movements along the post.

The operation of the apparatus will now be explained with reference made to figs. 2a-2d, wherein a working cycle is illustrated through schematic end views of the seedling aligner 4 and the sleeve holder 6. The working cycle of the pneumatically operated embodiment that is used herein to explain the invention comprises the following steps:
- Start
- Moving the seedling aligner inwards above the cultivation cassette, positioning the rulers one on each side of a row of seedlings
- Turning the rulers into horizontal position
- Elevating the rulers
- Measuring the seedling lengths
- Descending the sleeve holder
- Isolating the rulers from the pneumatic drive, permitting passive turning of rulers by means of the descending sleeve holder
- Lowering the rulers synchronously with the descending sleeve holder
- Releasing the sleeve onto the seedling
- Where appropriate, fixation of the sleeve on the seedling through stapling, flattening or other method of fixation
- Elevating the sleeve holder
- Turning the rulers into vertical position
- Withdrawing the seedling aligner with rulers from the cultivation cassette
- Moving the apparatus to the next row of seedlings

Accordingly, fig. 2a illustrates a position after start of the working cycle wherein the seedling aligner, from a starting position at the side of the cultivation cassette, is inserted above the cassette such that the rulers 9 extend between the rows of seedlings. The seedling aligner is located in its lowermost position, and the sleeve holder 6 is positioned in its uppermost position above the seedlings and centred above a parting line between the pairs of rulers 9, which take a substantially vertical position in this mode.

From the starting position of fig. 2a the seedling aligner 4 is elevated towards the supporting position illustrated in fig. 2b, wherein the rulers 9 are, simultaneously or before being elevated, turned into a substantially horizontal position. During this portion of the working cycle the seedlings are captured in the ruler's recesses 12 to be straightened towards the sleeve holder 6, so as to be positioned in the sleeve holder's path of movement.

Fig. 2c illustrates the sleeve holder in operation for applying a sleeve 21 over a seedling, in an initial part of a sleeve applying sequence wherein the uppermost pair of rulers 9 are turned back towards the vertical position, and out of the sleeve holder's path of movement.

Fig. 2d illustrates a finishing sequence of the sleeve applying sequence wherein the sleeve holder is located in its lowermost position. All rulers 9 are now pivoted out of the sleeve holder's path of movement so as to extend on opposite sides of the sleeve holder. The sets of rulers in the seedling aligner are all returned to their lowermost positions.

The working cycle is completed as the sleeve is released from the sleeve holder which is returned to its elevated position above the seedlings, whereupon the apparatus including the seedling aligner and the sleeve holder is returned to the starting position at the side of the cultivation cassette. The seedling applying apparatus, or the cultivation cassette, can now be moved for a distance corresponding to the spacing between the rows of seedlings before initiating the next working cycle.

It shall also be mentioned that the apparatus of the illustrated embodiment comprises a stapler to be described with reference to the schematic drawing of fig. 3. The stapler is effective for fixation of the sleeve onto the seedling by the aid of a staple. To this purpose, a stapler 22 with a supply of staples is supported on the sleeve holder head. The stapler 22 is pivotally journalled in the sleeve holder head 5 and driven by an air cylinder 23 to perform a striking motion towards an anvil 24, which is simultaneously driven by the same drive means 23 and a system of link arms 25, 26 in an oppositely directed striking motion about a pivot 27. The stapler 22 and the anvil 24 meet at the extended centre of the sleeve holder for application of a staple that penetrates the sleeve on opposite sides of the seedling stem. The anvil may have a counter support formed with guiding grooves which effect an outwards bending of the legs of the staple, and may also have a recess formed between counter supporting surfaces in which the stem is received so as not to be pinched upon stapling.

It will also be understood, albeit not specifically shown in drawings, that the sleeve holder head preferably is associated with a supply of sleeves from which singular sleeves can be individually loaded into the sleeve holder in each working cycle. Loading of sleeves into the sleeve holder can in a favourable way be accomplished by means of an air driven mechanism for separation and feeding of individual sleeves from one of a number of supplies, in which sleeves of different lengths are stored. In particular, an embodiment can be foreseen wherein the sleeve holder, when elevated to its starting position for a consecutive working cycle, is pushed over a separated sleeve to engage the same and carry it along in the next sleeve applying sequence.

The apparatus may alternatively be arranged with a singular sleeve holder head 5 which moves on the support arm 19, or which moves together with the support arm, for successively applying sleeves onto all seedlings in a row of seedlings. Preferably though, the support arm 19 carries a number of sleeve holder heads with sleeve holders 6 corresponding to the number of seedlings in a row, for simultaneous application of sleeves onto all seedlings standing in one row.

### FEASIBLE MODIFICATIONS OF THE ILLUSTRATED EMBODIMENT

In alternative to the three pairs of rulers included in the illustrated example, a modified seedling aligner can comprise a smaller or greater number of rulers. A greater number of rulers may favourably be arranged for guiding seedlings of different lengths into the sleeve holder's path of movement. The apparatus preferably includes at least two pairs of rulers.

It is also possible to effect straightening of the seedlings solely by turning of the rulers and without a vertical separation of the pairs of rulers. By means of separate valves, turning of the rulers can be individually controlled and performed pair by pair in series, beginning with the lowermost pair of rulers, as an alternative to a simultaneous turning of all rulers to the working position. If necessary, the free ends of the rulers may be supported in guides that provide increased longitudinal stability to the rulers. The seedling receiving recesses may further be otherwise shaped, and may be semicircular or elliptical in alternative to the aforementioned U- or V-shaped recesses.

The seedling aligner may also if necessary be equipped with means to deflect the seedlings of adjacent seedling rows when the apparatus is positioned above the cultivation cassette. A deflecting means may for this purpose be arranged to extend sideways from the rulers in their full lengths so as to expose the subject seedling row and this way to facilitate for the sensors to detect the lengths of the seedlings.

The sleeve holder and the sleeve holder head may alternatively be movably supported in the frame separate from the seedling aligner, and their movements independently driven and controlled. In such embodiment, the sleeve holder head and sleeve holder may be arranged to move sideways and horizontally for picking up sleeves, and vertically movable for applying the sleeves.

These are merely to be seen as non-limiting examples of feasible modifications which are all covered within the scope of the invention as defined in the claims.

## Claims

1. An apparatus configured for applying a tube-shaped sleeve onto a seedling standing in a cultivation cell formed in a cultivation cassette comprising at least one row of cultivation cells, the apparatus comprising positioning means for positioning of the cultivation cassette relative to a holder (6) for sleeves, the sleeve holder (6) arranged movable and driven for reciprocating motion in the length direction of a seedling to effect insertion of the seedling into a sleeve such that the sleeve extends about the seedling in at least a portion of the length of the seedling, **characterized by** a seedling aligner (4) comprising a set of rulers (9) which extend side by side in pairs and which are associated with drive means (13) by which each ruler (9) is pivotable about a pivot axis located near to one longitudinal edge of each ruler respectively, to assume a horizontal orientation wherein the rulers between themselves support the seedling in the path of movement of the sleeve holder (6), from which position the rulers (9) are pivotable into a vertical orientation wherein the rulers extend outside and on opposite sides of the sleeve holder's (6) path of movement.

2. The apparatus of claim 1, **characterized in that** two or more pairs of rulers (9) are arranged at separate levels underneath the sleeve holder (6).

3. The apparatus of claim 1 or 2, **characterized in that** each ruler (9) in a pair of rulers is a flat and elongate element having longitudinal edges running in parallel, wherein a pivot (11) extends from the end of the ruler substantially as an extension of one longitudinal edge of the ruler, the pivot forming an axis about which the ruler is pivotable.

4. The apparatus of claim 3, **characterized in that** the pair of rulers (9) by means of the pivots (11) are journalled pivotally in a support unit (10) comprising a turning motor (13), such as a pneumatic motor, and a gear transmission (14) by which the rulers (9) are linked together for simultaneous rotation in opposite directions of rotation.

5. The apparatus of any of claims 1-4, **characterized in that** the rulers (9) are arranged to be passively turned by the sleeve holder (6) from the horizontal orientation to a substantially vertical orientation at the side of the sleeve holder's path of movement.

6. The apparatus of any preceding claim, **characterized in that** the other longitudinal edge of the ruler (9) is shaped with evenly distributed recesses (12) forming seedling supporting positions for singular seedlings.

7. The apparatus of claim 6, **characterized in that** said recesses (12) are U-shaped or V-shaped with a mouth widening towards the edge of the ruler.

8. The apparatus of any preceding claim, **characterized in that** the rulers (9) within each pair of rulers are arranged at separate and nearby related levels, and are mutually overlapping in the width direction such that corresponding recesses (12) of the two rulers (9) together form a circumferentially defined opening (12') for the seedling when the rulers are turned to the horizontal orientation.

9. The apparatus of claim 8, **characterized in that** at least the uppermost pair of rulers is adjustable in the height direction based on a measurement of the length of the seedling by means of one or several sensors.

10. The apparatus of any preceding claim, **characterized in that** the sleeve holder is comprised in a sleeve holder head (5) which is supported on an arm (19) that is movably arranged in the apparatus.

11. The apparatus according to claim 10, **characterized in that** the sleeve holder head (5) is arranged for loading of singular sleeves into the sleeve holder (6).

12. The apparatus of claim 10 or 11, **characterized in that** the sleeve holder head comprises means for fixation of the sleeve onto the seedling, such as means for flattening of the sleeve, or means (22, 23) for the application of a staple through the sleeve.
